# EUROPEAN PATENT APPLICATION

(11) **EP 1 550 898 A1**
(43) Date of publication of application: **06.07.2005**
(21) Application number: 03400072.9
(22) Date of filing: 30.12.2003
(51) Int. Cl.: G02C 9/04, G02C 5/00

(54) **Eyeglass frame with replaceable lens modules**

(71) Applicant: Oriver Cp,. Ltd., Tainan, Taiwan (R.O.C.) (TW)
(72) Inventor: Chen, Yun-Hsiu, Tainan, Taiwan R.O.C. (TW)
(74) Representative: UEXKÜLL & STOLBERG

(57) **Abstract**

The present invention is an eyeglass frame arrangement with replaceable lens modules. The eyeglass frame comprises a frame unit and a supporting unit. The frame unit comprises a frame body and two temples. At the middle portion of the frame body is a nose bridge where a hole is found to receive a first magnetic material. The supporting unit is designed to engage the nose bridge of the frame unit. Thus, a rimless sun-shading lens module attached with a second magnetic material can be held on the eyeglass frame by coupling the first magnetic material with the second one. Meanwhile, an optical lens module can be coupled to the eyeglass frame by the supporting unit.

## Description

### BACKGROUND OF THE INVENTION

### FIELD OF THE INVENTION

The present invention relates to an eyeglass frame, more particularly to an eyeglass frame with replaceable lens modules so users can use the multi-functional eyeglass frame with various lens modules.

### DESCRIPTION OF THE RELATED ART

Two solutions are available for the problem of near-sightedness: by wearing suitable optical glasses or contact lenses. A pair of optical glasses are disposed within an eyeglass frame and located in front of the eyes of a user, whereas contact lenses are in direct contact with the eyeballs of a user.

On the occasion of needing to wear a pair of sun-shading glasses, myopic persons who used to wear contact lenses can put on sunglasses without any hassle, whereas for those used to wear optical glasses, inconvenience arises. Since optical glasses are fixed within an eyeglass frame, users may couple an auxiliary sunglass frame onto a primary optical eyeglass frame (European Patent Application No. 458815 and No. 1115023) or wear sun-shading optical glasses.

In fact, those used to wear optical glasses, occasionally wear contact lenses. Thus, sun-shading near-sighted glasses or optical glasses with removable sunglass frame are rendered useless while contact lenses are in use at the same time. This may result in users of optical glasses or contact lenses carrying an extra pair of sunglasses, sun-shading near-sighted glasses or a removable sung lass frame.

### SUMMARY OF THE INVENTION

The object of the present invention is to provide an eyeglass frame with replaceable lens modules so as to be free from the restraint of eyeglass frame and be able to enjoy the diverse styles of lens modules.

Another object of the present invention is to provide a quick solution to change auxiliary eyeglass frames by use of the magnetic force between a magnetic material on an eyeglass frame which has no lens and a rimless sun-shading lens module or optical lens module.

Another object of the present invention is to provide an eyeglass frame with replaceable lens modules so as to fix one or two lens modules on an eyeglass frame at the same time by use of a magnetic material. Thus, users can enjoy various styles of eyeglasses.

Another object of the present invention is to provide an eyeglass frame with replaceable lens modules so users can couple a sun-shading lens module, an optical lens module or both on an eyeglass frame to create different styles of eyeglasses.

According to one aspect of the present invention, an eyeglass frame with replaceable lens modules comprises a frame unit and a supporting unit. The frame unit comprises a frame body and two temples. At the middle portion of the frame body is a nose bridge where a hole is found to receive a first magnetic material. The temples are mounted at two sides of the frame body. With regard to the supporting unit, it is designed to engage the nose bridge of the frame unit.

The middle portion of a rimless sun-shading lens module is attached with a second magnetic material. By coupling the first magnetic material with the second one, the eyeglass frame can hold the sun-shading lens module in place, and an optical lens module can be coupled to the eyeglass frame by the supporting unit.

According to another aspect of the present invention, a pair of eyeglasses comprises a frame unit and a supporting unit. The frame unit comprises a frame body and two temples. At the middle portion of the frame body is a nose bridge where a hole is found to receive a first magnetic material. The temples are mounted at two sides of the frame body. With regard to the supporting unit, it is designed to engage the nose bridge of the frame unit. The middle portion of a sun-shading lens module features the second magnetic material which is used to couple with the first magnetic material of the frame unit. An optical lens module is coupled with the supporting unit and located at the inner side of the frame unit.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
FIG. 1 is a perspective view of an eyeglass frame of the present invention.
FIG. 2 is a perspective view of a rimless sun-shading lens module which is to be coupled with an eyeglass frame of the present invention.
FIG. 3 is a perspective view of an optical lens module which is to be coupled with an eyeglass frame of the present invention.
FIG. 4 is a perspective view of the present invention coupled with an optical lens module.
FIG.5 is a perspective view of the present invention coupled with a sun-shading lens module.
FIG.6 is a perspective view of the present invention coupled with a sun-shading lens module and an optical lens module.

### DETAILED DESCRIPTION OF THE PREFERRED EMBODIMENT

The following is a detailed description of the best presently known modes of carrying out the inventions. This description is not to be taken in a limiting sense, but is made merely for the purpose of illustrating the general principles of the inventions.

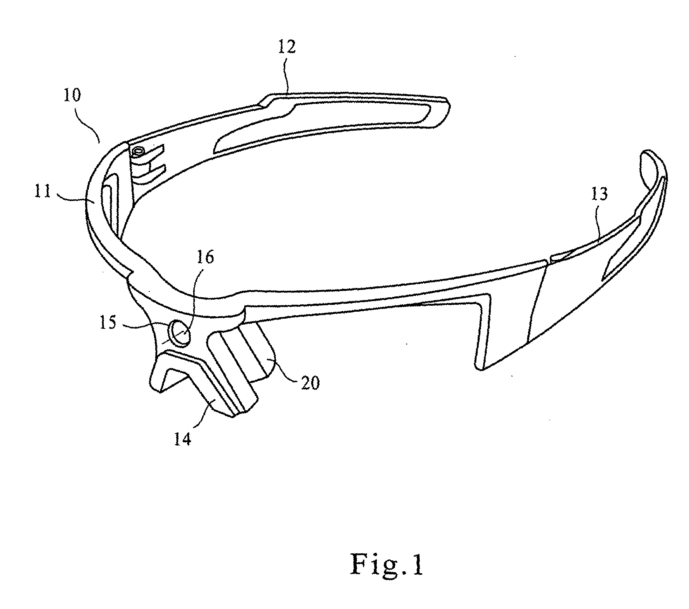

FIG. 1 is a perspective view of an eyeglass frame of the present invention. According to a preferred embodiment of the present invention, an eyeglass frame with replaceable lens modules comprises a frame unit 10 and a supporting unit 20. The frame unit 10 comprises a U-shape or similar to a U-shape frame body 11 whose middle portion is disposed with a nose bridge 14 where a hole 15 can be found. A magnetic material 16 is inserted into the hole 15 to hold a lens module which is equipped with corresponding magnetic material. The frame unit 10 comprises two temples 12, 13 which are pivoted at the two sides of the frame body 11 by use of screws. The supporting unit 20 is coupled with the nose bridge 14 of the frame unit 10 and supports an optical lens module. A groove is disposed on the supporting unit 20 to fix the optical lens module to an eyeglass frame so as to retain the eyeglass frame within the sightline of a user.

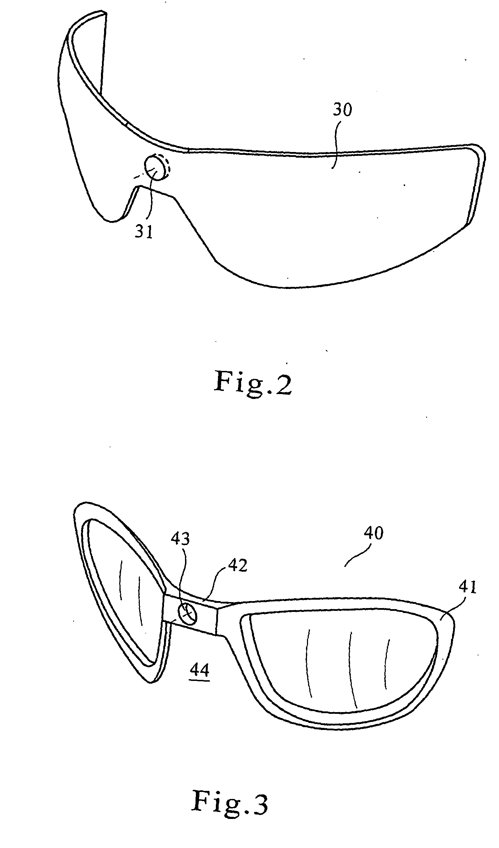

FIG. 2 is a perspective view of a rimless sun-shading lens module which is to be coupled with the present invention. The sun-shading lens module 30 is rimless and stretches towards both sides from the middle portion of the lens module. On the middle portion of the sun-shading lens module 30 is the second magnetic material 31 which is used to attract a magnetic material 16 on the nose bridge 14 so as to fix the sun-shading lens module 30 to the eyeglass frame.

FIG. 3 is a perspective view of an optical lens module which is to be coupled with an eyeglass frame of the present invention. In one embodiment of the present invention, an optical lens module 40 comprises a frame 41 with suitable near-sighted optical lenses inserted therein. The optical lenses are made of glass. Located in the middle portion 42 of the frame 41 is a hole 43, and the arch 44 of the lower middle portion 42 fits the supporting unit 20 correctly. Therefore, the optical lens module 40 are fixed on the supporting unit 20 and the hole 43 can hold the inner side of the middle portion of the frame body 11. An alternate embodiment shows that a projection from the middle portion 42 of the frame 41 can be coupled with the inner side of the middle portion of the frame body 11.

According to another embodiment of the present invention, the optical lens module 40 is made of non-glass material such that there is no need to use a frame to hold the lenses. The front side of the middle portion of the optical lens module 40 features a projection or a magnetic material and the arch of the lower middle portion fits the supporting unit well. In this way, the optical lens module 40 is supported by the supporting unit 20. The middle portion of the optical lens module 40 can either be coupled with or be attracted to the inner side of the middle portion of the frame body 11. Furthermore, according to another embodiment, at least one corresponding spot of the optical lens module 40 and the supporting unit 20 have magnetic material to firmly attach the optical lens module 40 to the supporting unit 20.

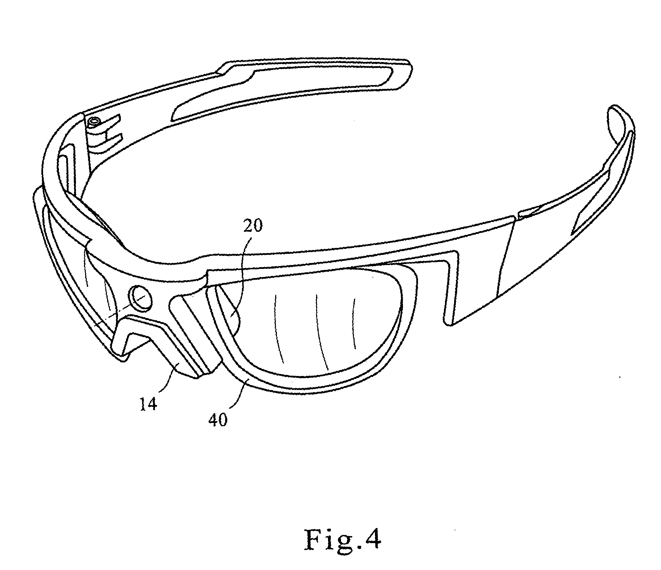

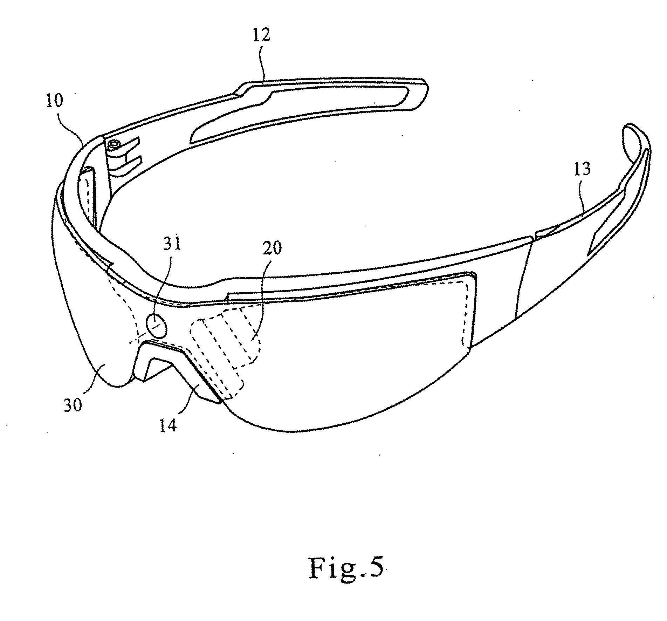

FIGs 4, 5 and 6, show the present invention in use. Referring to FIG. 4, an optical lens module 40 is coupled with an eyeglass frame to form a pair of optical glasses. The optical lens module 40 is fixed upon the supporting unit 20 and stays at the inner side of the eyeglass frame as well as in line with the sightline of the user. In addition, the middle portion 42 of the optical lens module 40 is coupled with or attracted to the inner side of the middle portion of the frame body 11 so as to be firmly secured upon the eyeglass frame. Referring to FIG. 5, the sun-shading lens module 30 is combined with the eyeglass frame with the optical lens module removed to form a pair of sunglasses, which caters to the need of those wearing contact lenses. The second magnetic material 31 on the sun-shading lens module 30 is attracted to the magnetic material 16 on the nose bridge 14 so as to retain the sun-shading lens module 30 at the front side of the eyeglass frame.

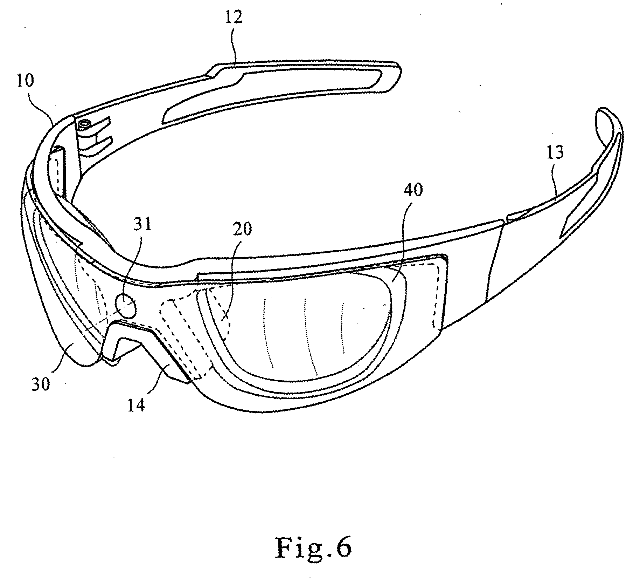

Referring to FIG. 6, the eyeglass frame of the present invention can simultaneously hold a sun-shading lens module 30 and an optical lens module 40. The sun-shading lens module 30 is attracted to the magnetic material 16 on the nose bridge 14 so as to be retained at the front side of the eyeglass frame whereas the optical lens module 40 is supported by the supporting unit 20 so as to stay at the inner side of the eyeglass frame. The sun-shading lens module 30 and the optical lens module 40 are fixed on the eyeglass frame and stay in line with the sightline of the user.

The eyeglass frame, the sun-shading lens module or the optical lens module of the present invention boasts many advantages: various styles of lens modules are available and free from the restraint of eyeglass frames; rimless lens module weighs less; during sports activities, various colors of sun-shading lens modules are applicable depending on sunshine outdoor; users can freely use the sun-shading lens module as the primary frame and the optical lens module as the auxiliary or vice versa; the groove on the supporting unit holds the optical lens module securely so as to meet the requirements of sports; the present invention offers a quick solution to change lens modules.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

## Claims

1. An eyeglass frame with replaceable lens modules, comprising:
a frame unit, including:
a frame body, with the middle portion thereof being disposed with a nose bridge having a hole to receive a magnetic material; and
two temples located at two sides of said frame body; and
a supporting unit engaging with said nose bridge of said frame body.

2. The eyeglass frame as in claim 1, wherein said temples are pivoted at both sides of said frame body.

3. The eyeglass frame as in claim 1 or 2, wherein said frame unit is U-shape or similar to a U-shape.

4. The eyeglass frame as in claim 1, wherein said supporting unit further comprises a groove so as to secure an optical lens module firmly.

5. The eyeglass frame as in claim 1, wherein said magnetic material is used to secure a sun-shading lens module with a magnetic material inserted.

6. A pair of sunglasses, comprising
an eyeglass frame, comprising:
a frame unit, including:
a frame body, with the middle portion thereof being occupied by a nose bridge having a hole to receive a first magnetic material; and
two temples located at two sides of said frame body; and
a supporting unit engaging with said nose bridge of said frame body; and
a sun-shading lens module, wherein a hole being situated in the middle portion and having a second magnetic material so as to be attached to said first magnetic material of said frame body.

7. The pair of sunglasses as in claim 6, wherein said temples are pivoted at two sides of said frame body.

8. The pair of sunglasses as in claim 6 or 7, wherein said frame unit is U-shape or similar to a U-shape.

9. A pair of optical glasses, comprising:
an eyeglass frame, comprising:
a frame unit, including:
a frame body, with the middle portion thereof being disposed with a nose bridge having a hole to receive a magnetic material;
two temples located at two sides of said frame body; and
a supporting unit engaging with said nose bridge of said frame body; and
an optical lens module coupled with said supporting unit.

10. The pair of optical glasses as in claim 9, wherein said temples are pivoted at two sides of said frame body.

11. The pair of optical glasses as in claim 9 or 10, wherein said frame body is U-shape or similar to a U-shape.

12. The pair of optical glasses as in claim 11, wherein said optical lens module and said supporting unit respectively include a magnetic material at at least one corresponding spot thereof so as to securely couple each other.

13. The pair of optical glasses as in claim 9 or 10, wherein said optical lens module and said supporting unit respectively include a magnetic material at at least one corresponding spot thereof so as to securely couple each other.

14. The pair of optical glasses as in claim 9, wherein said supporting unit further comprises a groove so as to secure an optical lens module.

15. The pair of optical glasses as in claim 14, wherein the shape of the lower middle portion of said optical lens module is in accordance with said groove of said supporting unit.

16. A pair of double-duty glasses, comprising:
an eyeglass frame, comprising:
a frame unit, including:
a frame body, with the middle portion thereof being occupied by a nose bridge having a hole to receive a first magnetic material;
two temples located at two sides of said frame body; and
a supporting unit engaging with said nose bridge of said frame body;
a sun-shading lens module, wherein a hole being disposed in the middle portion and having a second magnetic material so as to be attached to said first magnetic material of said frame body; and
an optical lens module coupled with said supporting unit.

17. The pair of double-duty glasses as in claim 16, wherein said temples are pivoted at two sides of said frame body.

18. The pair of double-duty glasses as in claim 16 or 17, wherein said frame unit is U-shape or similar to a U-shape.

19. The pair of double-duty glasses as in claim 18, wherein said optical lens module and said supporting unit respectively comprise a magnetic material at least one corresponding spot thereof so as to magnetically couple with each other.

20. The pair of double-duty glasses as in claim 16 or 17, wherein said optical lens module and said supporting unit respectively include a magnetic material at at least one corresponding spot thereof so as to magnetically couple with each other.

21. The pair of double-duty glasses as in claim 16, wherein said supporting unit further comprises a groove so as to secure an optical lens module.

22. The pair of double-duty glasses as in claim 21, wherein the shape of the lower middle portion of said optical lens module is in accordance with said groove of said supporting unit.
